# EUROPEAN PATENT SPECIFICATION

(11) **EP 2 447 031 B1**
(45) Date of publication and mention of the grant of the patent: **17.09.2014**
(21) Application number: 11184415.5
(22) Date of filing: 07.10.2011
(51) Int. Cl.: B29C 35/08, F21S 4/00, B29C 47/00, B29L 31/00, B29K 105/00, B29C 47/02, B29C 35/10, B29C 47/10, B29K 83/00, F21V 21/088, F21V 21/02, F21Y 101/02

(54) **Flexible lighting elements in a single body**
Flexible Beleuchtungselemente in einem Einzelkörper
Éléments d'éclairage flexibles dans un seul corps

(30) Priority: 28.10.2010 IT MI20102014
(43) Date of publication of application: 02.05.2012
(73) Proprietor: Posa S.P.A., 20047 Brugheiro (Monza-Brianza) (IT)
(72) Inventor: Ripa, Alberto, 20131 Milano (IT); Passerini, Marco, 25057 Sale Marasino (Brescia) (IT); Lo Cicero, Federico, 20090 Segrate (Milano) (IT)
(74) Representative: Petruzziello, Aldo

(56) References cited:
- WO-A1-2005/106320
- WO-A1-2007/041805
- WO-A1-2008/014682
- WO-A1-2009/136861
- DE-A1-102007 043 716
- DE-A1-102008 009 808
- US-A- 5 769 533
- US-A1- 2010 277 914
- US-B1- 6 186 645

## Description

The present invention relates to flexible manufactured articles made of silicone elastomer, crosslinkable without heat with UV radiation, which encapsulate strips of LED lights, and to their process of manufacture by coextrusion, which are used as lighting bodies having optionally also the capacity for water and air sealing like gaskets.

LED (*light emitting diode*) lights or sources of various shapes, types (SMD, DIP, etc.), powers and supplies, are extensively widespread sources of light thanks to their numerous advantages from the lighting engineering viewpoint, including high durability, high yield, safe operation as they are often at very low voltage, possibility of miniaturisation of the lighting appliances, lack of sensitivity to vibrations, eco-compatibility thanks to the lack of mercury, possibility in some models of dynamic effects (RGB, RGBW colour change, etc.).

Very often these sources are mounted on flexible supports, of various types and lengths, which also hold the relative electrical contacts and circuits, creating flexible lighting strips (*LED strip*) suitable for being applied to elements or surfaces of any geometry.

When said strips of LEDs are used outdoors or when it is required for them to belong to a specific IP protection class necessary for the specific use, they are covered with a sheath of appropriate material made of plastic, rigid or flexible, thanks also to the fact that said LED lights show efficient optics in the plastic.

The flexible coverings used to date have a base of plasticised polyvinyl chloride (PVC) and of RTV silicone elastomer.

The use of plasticised PVC allows the covering of the LED strip by direct continuous coextrusion process. The plasticised PVC does however have limits in the temperature of use (typically from -20°C up to +60°C), contains plasticisers and is not advisable for outdoor uses (in an outside area) with strong heat change or with particular rigid or torrid climates.

The RTV silicone elastomers, like silicone elastomers in general, have the advantage instead of being usable in a wider temperature range (typically from -60°C up to +200°C) compared to plasticised PVC, do not contain plasticisers, are very transparent, have excellent resistance to atmospheric agents and to ultraviolet rays and are for this reason perfectly suitable for uses in indoor and outdoor areas.

The use of RTV silicone elastomers does not allow however the covering of the strip of LEDs by direct coextrusion, as a continuous process. RTV silicone elastomers are in fact polymers with low viscosity and low molecular weight, usually in liquid form. They are deposited over the strip of LEDs to be covered, in suitable forms or moulds, and then crosslinked at ambient temperature or slightly higher, with crosslinking times which may vary from many minutes to several hours, according to the types. The use of forms and moulds is necessary since these liquid silicone elastomers tend not to maintain the shape given to them during the time of crosslinking and therefore to deform. This peculiarity limits the production of said strips of LEDs covered with RTV silicones to a few metres at a time, and not with a continuous process. Moreover, should it be required to change the shape of the section of the covering, it would be necessary to make a special modified mould.

Other types of liquid silicones, crosslinkable in shorter times and at high temperature, exist. Neither are these silicones suitable to be used in extrusion processes due to their low viscosity and can only be transformed with moulding techniques.

The patent WO 2009/136861 describes a method for depositing liquid polymers on substrates in aluminium, in order to make a "formed-in-place-gasket", i.e. a gasket formed and crosslinked in situ. Said liquid polymers, due in fact to their low viscosity, cannot however be processed with other methods, for example by means of extrusion with single or double-screw horizontal extruders, with cooled chamber.

Solid silicone elastomers also exist, characterised by high viscosity, considerably greater compared to RTV silicones and to the other liquid silicones, which makes their extrusion very easy. These materials, commonly named HTV (or HCR), are crosslinkable in short lengths of time, necessary for maintaining the shape imposed on them, but only at very high temperatures (higher than 200°C) which the strips of LEDs could not withstand. Direct covering of strips of LEDs by continuous coextrusion process using HTV silicone elastomers is not therefore possible.

In fact, the patent application WO 2007/041805 describes elongated lighting means containing LED lights and formed by an internal body made of HTV silicone for housing, along its elongated and parallel grooves, only the electrical conductors which partially project therefrom to allow the LED sources to be welded thereon, and by a more external casing, which covers the LED lights, made of HTV silicone crosslinkable at a lower temperature compared to that of the internal body in order to avoid the damaging of the welds on the conductors. It is specified that the crosslinking of the aforesaid external casing in HTV silicone takes place in any case with thermal effect, with a passage through a heated area.

This technology results in a complex production process with prolonged production times given that several operational phases are required to prepare the various bodies and assemble them.

Moreover it cannot be deduced that with this technique any required shape can be imparted to the external casing without avoiding deformations during the extrusion, since the need to operate at a lower crosslinking temperature compared to the typical one for HTV silicones inevitably results in a slower speed of crosslinking, Additionally the same lighting body of the manufactured articles described in WO 2007/041805 does not appear to be bendable unless with the risk of breakage of the conductors and therefore of the lighting system.

US 2010/0277914 discloses UV curing of polymer material.

It should be noted that the possibility of imparting any shape on a lighting element with LEDs and/or on the external casing of the same is particularly desirable in order to confer also an aesthetic quality on the manufactured article.

The use of said solid HTV silicones for coverings of strips of LEDs could be possible with a (theoretical) process which provides for the preparation, first, of a profile (sheath) of adequate section by means of a continuous extrusion process of the HTV silicone, subsequently inserting manually the strip of LEDs in the profile and sealing all this with a silicone sealant at ambient temperature or slightly higher. This sequence, apart from its complexity, does not allow the strip of LEDs to be encapsulated perfectly and bubbles of air prevented from being trapped. The air bubbles are to be avoided in that they may alter the optical dot-shaped effect of the LED lights.

Additionally, since the covered strips of LEDs are commonly applied to surfaces by means of double-sided adhesives, the adhesion could be undermined in outdoor uses following a hardening or ageing of the same adhesive.

Moreover, since very often said covered strips of LEDs are attached to buildings, it is desirable for them to exert also an action of water and/or air sealing when inserted in a section bar or frame like gaskets and therefore it is desirable for their covering to be made in any form and geometry corresponding to that of the seat wherein they are to be housed.

The object of the present invention is that of providing covered strips of LEDs which overcome, at least in part, the disadvantages of the prior art, and which are entirely or partly transparent, usable in a wide range of temperatures without damage, which can be made by means of a continuous process without having the deterioration, even only partial, of the strips of LEDs encapsulated therein, and which can be manufactured in any length required, and with a covering having any form and/or geometry to obtain also high aesthetic quality.

A further object of the present invention is that of providing these covered strips of LEDs which are flexible, elastic and also bendable in order to be able to create for example writing or patterns, which are suitable for being easily mounted without requiring the use of double-sided adhesives and in seats of any form and geometry, and which are able also to exert a sealing action, similarly to gaskets, when inserted in said seats.

Moreover, another object of the present invention is that of providing these covered strips of LEDs which can be made with a simple process, with short production times, which avoids the presence of air bubbles inside the strip.

These objects are achieved by the covered strips of LEDs in accordance with the invention having the features listed in the annexed independent claim 1.

Advantageous embodiments of the invention are disclosed by the dependent claims.

The object of the present invention is a single-body lighting element formed by a strip of LEDs encapsulated in a solid silicone elastomer material (also defined as silicone rubber), extrudable in a continuous process and crosslinkable without heat by means of UV radiation (i.e. without heat supply as instead takes place for example in IR ovens, in hot air ovens, in UHF ovens, in molten salt baths, in autoclave), also in a continuous process, whereto any form and geometry can be imparted.

As mentioned, strip of LEDs refers to that which is normally identified by the term LED strips, formed solely by LED lights and conductors without any covering.

The strips of LEDs are in practical terms in the form of a band and are made up of a flexible printed circuit, slim in thickness terms, with variable dimensions and shape, which constitutes the conductor whereon one or more LED (light-emitting diodes) sources are mounted which are connected electrically to this printed circuit. There are moreover electrical connectors which allow the connection of the LED strip to a source of energy or of various strips one to the other.

In practice the LED sources or lights are mounted on the slim band which includes in its interior all the electrical elements including the conductors necessary for the functioning of these LED lights.

As LED any one of the various existing types can be used such as SMD, DIP and the like.

The lighting element in accordance with the present invention is a single body in silicone crosslinkable without heat which incorporates, without any intermediate space for air bubbles, the aforesaid strip of LEDs without preventing the diffusion of the light of the LEDs, thanks to the good transparency of the silicone elastomer.

The external profile in silicone elastomer material has the purpose of protecting the strip of LEDs against external agents (air, water, atmospheric agents) and therefore will have the most suitable shape according to the type of final application.

In practice the external silicone profile represents the only sheath which covers the strip of LEDs, isolating it from the exterior.

Moreover, if the lighting element is intended to be inserted in a seat, the external profile may have also hitching feet, according to the seat wherein it is to be housed, and possibly sealing and/or abutting elements, allowing therefore the use of double-sided adhesives to be avoided.

Moreover, during the production process, a rigid or semi-rigid element may also be coextruded which, once encapsulated in the manufactured article, is able to confer to the manufactured article rigidity or, if deformable, a predetermined configuration.

In practice, in the lighting body of the present invention, the strip of LEDs is encapsulated in a single matrix of an extrudable silicone elastomer, crosslinkable without heat by means of UV radiation.

In the present invention, in fact, the band or strip of LEDs forms a single body with the covering in silicone in that the strip of LEDs is internal and integral with said covering thanks to the fact that the latter is coextruded over and around said strip of LEDs, making this strip of LEDs non-removable in relation to the covering and removable only by breaking said covering.

Further features of the invention will be made clearer by the following detailed description referred to one of its embodiments purely by way of a non-limiting example, illustrated in the accompanying drawings, in which:
Fig. 1 is a cross-sectioned view of a first embodiment of the lighting body in accordance with the invention;
Fig. 2 is a cross-sectioned view of another embodiment of the lighting body equipped with feet in accordance with the invention;
Fig. 3 is a cross-sectioned view similar to that of Fig. 2 but equipped with feet with a different profile;
Fig. 4 is a cross-sectioned view similar to that of Fig. 2 and equipped moreover with an abutting element;
Fig. 5 is a cross-sectioned view similar to that of Fig. 3 and equipped moreover with attachment fins;
Fig. 6 is a perspective view of a second embodiment of the lighting body with a portion of casing partially removed.

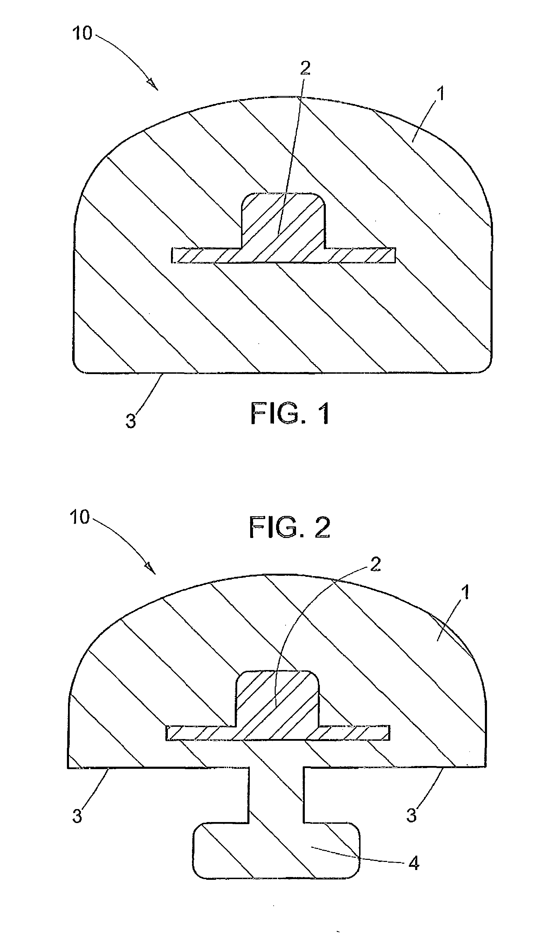

Referring to Figure 1, a first embodiment of a lighting body of the invention is illustrated, denoted by reference numeral 10.

This manufactured article 10 has a single covering 1 having a dome profile, which incorporates centrally the strip of LEDs 2.

The dome profile of the covering 1 is turned outwards while the back side 3 of this manufactured article is a smooth surface intended for its attachment. In this case it is possible to place on the surface 3 a double-sided adhesive, even if this is not necessary in the case wherein the seat is of such a shape as to allow the forced fit of said manufactured article 10.

As is clear from Figure 1, the strip of LEDs 2 is completely embedded in the covering body 1, without any possibility of having a possible air pocket. This is due to the process of coextrusion whereby the gasket 10 of the present invention is made, described herein below, thanks to which the silicone material is coupled to the strip of LEDs in such a way as to cover it entirely.

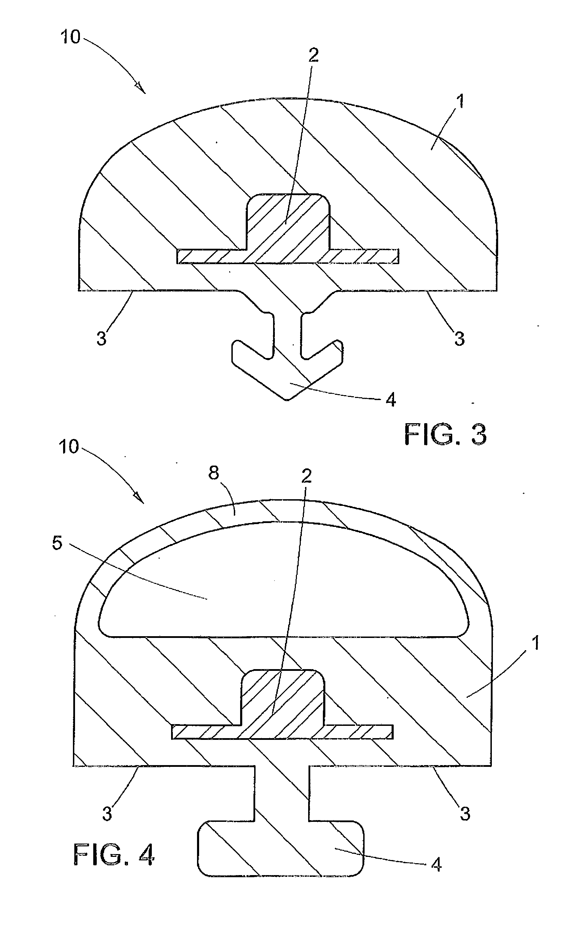

In the embodiments of Figs. 2 and 3, the lighting body 10 has a single external covering body 1 having a dome profile like that of Fig. 1 while having on the back side 3 a T-shaped hitching foot 4 (Fig. 2) for the insertion in a suitable section bar (not illustrated). Said hitching foot 4 is integral with the body 1 of said gasket 10. The shape of said foot 4 is not binding for the purposes of the present invention and can also be shaped like an arrow, as illustrated in Fig. 3, or any other shape.

The width of the foot 4 is not binding for the purposes of the present invention and depends only on the width of the seat of the section bar wherein said foot has to be inserted to perform the hitching of the lighting body.

In the embodiment of Figure 4, the manufactured article 10 has a single external covering body 1 having a dome profile and has in its interior a cavity 5 such as to form an abutting element 8, the LED strip 2 being again encapsulated integrally in the body 1 of said manufactured article 10. Additionally said manufactured article 10 has the same T-shaped foot 4 of the gasket of Fig. 2.

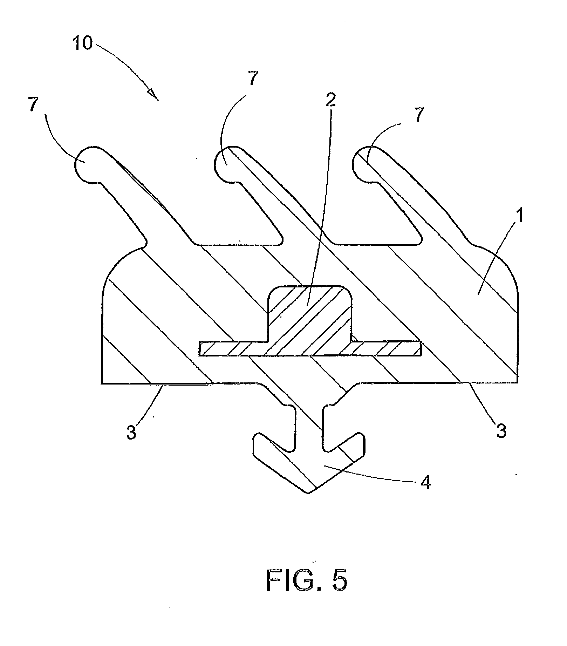

The shape of the profile of the external covering body 1 is not binding for the purposes of the present invention and may be of any shape, for example with one or more fins 7 projecting from the body 1, as illustrated in Fig. 5.

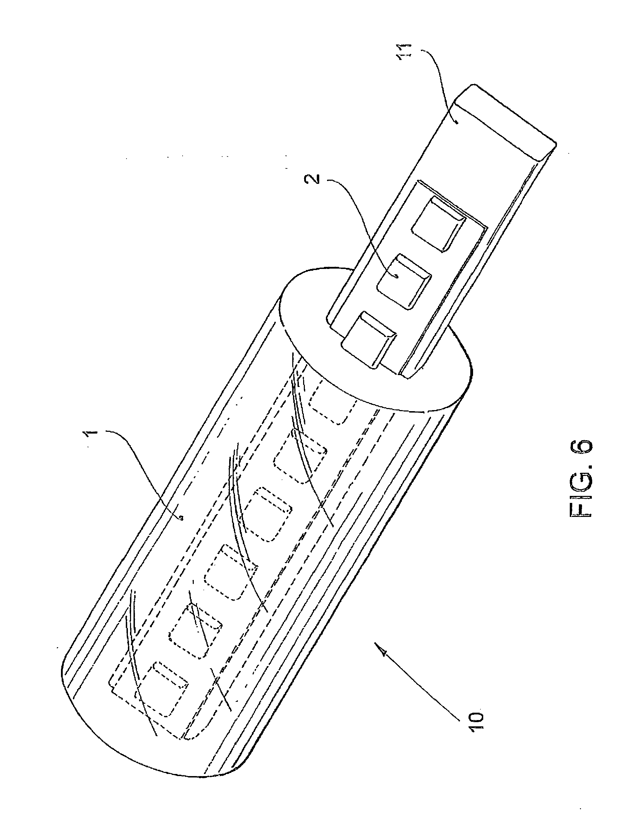

Fig. 6 illustrates a second embodiment of a lighting body 10 in accordance with the invention encapsulating a semi-rigid element 11, whose external covering is of a cylindrical shape and not intended for sealing.

The semi-rigid element 11 is shaped like a bar or strip and has the purpose of allowing the imparting on the final manufactured article of a certain rigidity or, if deformable, a predetermined configuration.

If deformable, this insert 11 has exclusively the purpose of allowing the lighting element 10 to be bent and to maintain the shape achieved, avoiding recovery of the original shape before bending. This insert 11 can be made up of any material suitable for this purpose such as for example aluminium, plastics and the like (excluding rubbers, for example silicone and the like).

Therefore, even if made of a metallic material, this insert 11 does not act as electrical conductor for the strip of LEDs and can be made also in a dielectric material, provided it is semi-rigid.

In this way it is possible to create writing and/or patterns by appropriately bending the lighting body of the present invention.

In Figure 6 the strip of LEDs 2 is illustrated in contact with said semi-rigid insert 11, even if this is not binding for the purposes of the present invention. This insert 11 can in fact also be placed at a certain distance from the strip of LEDs 2 provided it is aligned with it so as to enable the bending of the strip of LEDs and the consequent maintaining of the shape achieved, avoiding the recovery of the original shape of the lighting body.

The manufactured article or lighting body in accordance with the invention is obtained by means of the coextrusion in a continuous process of a silicone elastomer, crosslinkable without heat, around a strip of LEDs 2, optionally coupled with the insert 11. Said strip of LEDs 2 can have any thickness and width.

The silicone elastomer used here is typically a solid silicone elastomer, perfectly suitable for being extruded in high-pressure screw extruders and which can be crosslinked without the use of heat (cold) by means of UV radiation exposure.

Subsequently the coextruded silicone elastomer material which incorporates the strip of LEDs and optionally the insert 11 is crosslinked without heat in a few seconds by means of UV radiation exposure, at a temperature extensively compatible with all the strips of LEDs.

In the case wherein the use of additives is foreseen, for example to improve the resistance of the silicone elastomer to UV rays and/or to heat and/or to flame, to bacteria, to moulds, and/or to obtain colour effects, the present process includes also a phase of adding of said additives to said silicone elastomer before performing the phase of coextrusion.

Subsequently, if the insert 11 has been inserted, it is possible to proceed with the bending of the lighting body obtained to confer thereon the final shape required.

Thanks to the use of elastomeric silicone crosslinkable without heat it is possible therefore to make in a continuous process highly flexible and bendable lighting bodies or manufactured articles which can house internally strips of LEDs.

These manufactured articles are suitable for being used from the minimum up to the maximum temperature of functioning of the strip of LEDs. In fact said silicone elastomer, crosslinkable without heat, also has a wide range of temperatures of use from -60°C up to +200°C, similarly to the HTV silicone.

This siliconic material, crosslinkable without heat, used here for the making of the covering of the LED strips, can also be formulated with specific additives which impart specific propertied such as, for example, resistance to UV rays, to heat, to flame, to bacteria, to mould and/or with specific pigments for obtaining special colour effects.

The lack of PVC ensures the lack of hydrochloric acid fumes in the event of fire and the lack of plasticisers.

It should be noted that, thanks to the use of solid silicone elastomers, crosslinkable without heat, with high viscosity and high molecular weight, it is possible to obtain a covering having a stability of shape, consistency, elasticity and flexibility such as to allow these covered strips of LEDs to exert also an action of sealing, in corresponding seats of any form and geometry, similarly to conventional gaskets, facilitating therefore the use of said covered strips of LEDs also as gaskets.

Moreover the coextrusion allows the obtaining of covered strips of LEDs having an external profile of any form and geometry, a situation which cannot be achieved in the case of LED lighting means having elongated conductors and of other thickness such as those described in WO 2007/041805 and in the case of liquid silicones described in WO 2009/136861.

In practice, thanks to the use of a silicone elastomer, crosslinkable with UV radiation, as only covering of a strip of LEDs, the lighting element 10 in accordance with the present invention shows a series of advantages such as:
- transparency and lack of internal air bubbles;
- wide range of temperatures of use, without damage;
- simple production process, continuous, with short production times;
- possibility of being made in any length required and with a covering having any form and/or geometry to obtain a high aesthetic quality;
- flexibility and bendability.

It is to be understood that other types of transparent elastomers (rubbers) which can be crosslinked without heat can also be used to make the flexible external covering of the lighting element or body in accordance with the present invention.

Numerous detail modifications and changes, within the reach of a person skilled in the art, may be made to the present embodiment of the invention, in any case coming within the scope of the invention disclosed by the annexed claims.

## Claims

1. Flexible and bendable lighting element (10) in the form of a single body consisting of
a single external covering (1) in polymeric material,
an internal strip of LEDs (2) encapsulated in said covering which surrounds and is in contact, also partially, with said strip of LEDs (2),
said polymeric material of said external covering (1) being co-extruded over and around said strips so as to make said strip (2) integral with said covering (1),
an optional semi-rigid element (11) able to confer rigidity or, if deformable, a predetermined configuration to said lighting element (10),
**characterised in that**
said polymeric material of said external covering (1) is a solid silicone elastomer, co-extrudable in a continuous process by means of screw extruders and crosslinkable without heat by means of UV radiation exposure, said external silicone covering (1) being the only sheath which covers the strip of LEDs,
wherein said strips of LEDs are formed by a flexible printed circuit which constitutes the conductor whereon one or more LED sources are mounted and connected electrically to this printed circuit,
said strips being in the form of a slim band which includes in its interior all the electrical elements including the conductors necessary for the functioning of the LED lights.

2. Lighting element (10) according to claim 1, wherein on its back side (3) there are one or more hitching feet (4) which are integral with said covering (1).

3. Lighting element according to claim 2, wherein said feet (4) are T-shaped or arrow-shaped.

4. Lighting element according to any one of the previous claims, wherein said external covering (1) has a dome profile.

5. Lighting element according to any one of the previous claims, wherein said external covering (1) has in its interior a cavity (5) such as to form an abutting element (8).

6. Lighting element (10) according to any one of the previous claims, wherein said external covering (1) has one or more protruding fins (7) which are integral with it, said fins being abutting or sealing means.

7. Lighting element (10) according to any one of the previous claims, wherein the silicone elastomer material comprises one or more additives suitable for imparting resistance to UV rays and/or to heat and/or to flame, to bacteria, to moulds, and/or one or more pigments for obtaining colour effects.

8. Lighting element (10) according to any one of the previous claims, further comprising, encapsulated in the single external covering (1), a semi-rigid element (11) which allows the imparting of rigidity or, if deformable, a required final configuration.

9. Process for manufacturing the lighting element as defined in the previous claims, comprising the steps of:
- continuous coextrusion of a silicone elastomer, crosslinkable without heat, around a strip of LEDs;
- crosslinking of the previously coextruded silicone elastomer material by UV radiation exposure.

10. Process according to claim 8, wherein, before the coextrusion step, a step of adding to the silicone elastomer of the additives as defined in claim 7 is provided.

11. Use of the lighting element (10) of claims 1-8 as gasket.

## Patentansprüche

1. Flexibles und biegsames Beleuchtungselement (10) in der Form eines Einzelkörper, aufweisend
eine einzelne äußere Abdeckung (1) aus polymerem Material,
einem inneren Streifen mit LED (2), eingekapselt in der Abdeckung, die den Streifen mit LED (2) umgibt und auch teilweise mit diesem in Kontakt ist,
wobei das polymere Material der äußeren Abdeckung (1) über und um die Streifen herum coextrudiert ist, um den Streifen (2) mit der Abdeckung (1) zu integrieren,
ein optionales, halbsteifes Element (11) mit der Fähigkeit, Steifigkeit oder, wenn verformbar, eine im Voraus bestimmte Konfiguration auf das Beleuchtungselement (10) zu übertragen,
**dadurch gekennzeichnet, dass**
das polymere Material der äußeren Abdeckung (1) ein massives Silikonelastomer ist, das in einem kontinuierlichen Vorgang mithilfe von Schneckenextrudern coextrudiert und ohne Wärme durch UV-Strahlungsexposition vernetzt werden kann, wobei die äußere Silikonabdeckung (1) die einzige Umhüllung ist, die den Streifen mit LED bedeckt,
wobei die Streifen mit LED durch eine flexible gedruckte Schaltung gebildet werden, der den Leiter darstellt, auf dem eine oder mehrere LED-Quellen montiert und elektrisch mit dieser gedruckten Schaltung verbunden sind,
wobei die Streifen die Form eines schmalen Bands haben, das in seinem Inneren alle elektrischen Elemente einschließlich der für die Funktion der LED-Leuchten erforderlichen Leiter aufweisen.

2. Beleuchtungselement (10) nach Anspruch 1, wobei auf dessen Rückseite (3) ein oder mehrere Befestigungsfüße (4) angeordnet sind, die mit der Abdeckung (1) integriert sind.

3. Beleuchtungselement nach Anspruch 2, wobei die Füße (4) T- oder Bogenform aufweisen.

4. Beleuchtungselement nach einem der vorhergehenden Ansprüche, wobei die äußere Abdeckung (1) ein Kuppelprofil aufweist.

5. Beleuchtungselement nach einem der vorhergehenden Ansprüche, wobei die äußere Abdeckung (1) in ihrem Inneren einen Hohlraum (5) aufweist, um ein Abgrenzungselement (8) zu bilden.

6. Beleuchtungselement (10) nach einem der vorhergehenden Ansprüche, wobei die äußere Abdeckung (1) eine oder mehrere Flossen (7) aufweist, die damit integriert sind, wobei die Flossen Abgrenzungs- oder Abdichtungsmittel sind.

7. Beleuchtungselement (10) nach einem der vorhergehenden Ansprüche, wobei das Silikonelastomermaterial einen oder mehrere Zusatzstoffe aufweist, die Widerstand gegen UV-Strahlung und/oder gegen Wärme und/oder gegen Flammen, gegen Bakterien, gegen Schimmel vermitteln und/oder ein oder mehrere Pigmente zum Erhalten von Farbeffekten.

8. Beleuchtungselement (10) nach einem der vorhergehenden Ansprüche, ferner aufweisend ein in der einzelnen äußeren Abdeckung (1) eingekapseltes halbsteifes Element (11), das die Vermittlung von Steifigkeit oder, wenn verformbar, eine erforderliche endgültige Konfiguration gestattet.

9. Verfahren zur Herstellung des Beleuchtungselements wie in einem der vorhergehenden Ansprüche definiert, aufweisend die folgenden Schritte:
- kontinuierliches Coextrudieren eines ohne Wärme vernetzbaren Silikonelastomers um einen Streifen mit LED;
- Vernetzen des vorher coextrudierten Silikonelastomermaterials durch Exposition mit UV-Strahlung.

10. Verfahren nach Anspruch 8, wobei vor dem Schritt des Coextrudierens ein Schritt des Hinzufügens von Zusatzstoffen gemäß Definition in Anspruch 7 zum Silikonelastomer bereitgestellt wird.

11. Anwendung des Beleuchtungselements (10) nach Anspruch 1 bis 8 als Dichtung.

## Revendications

1. Elément d'éclairage flexible et pliable (10) sous la forme d'un corps unique se composant de :
un revêtement externe unique (1) en matériau polymère,
une bande interne de diodes électroluminescentes, DEL, (2) encastrée dans ledit revêtement qui entoure ladite bande de DEL (2) et est en contact partiellement avec celle-ci,
ledit matériau polymère dudit revêtement externe (1) étant coextrudé sur ladite bande et autour de celle-ci afin que ladite bande (2) fasse partie intégrante dudit revêtement (1),
un élément semi-rigide facultatif (11) apte à conférer une rigidité ou, si déformable, une configuration prédéterminée au dit élément d'éclairage (10),
**caractérisé en ce que**
ledit matériau polymère dudit revêtement externe (1) est un élastomère de silicone solide pouvant être coextrudé dans un processus continu au moyen d'extrudeuses à vis et pouvant être réticulé sans chaleur au moyen d'une exposition à un rayonnement ultraviolet, UV, ledit revêtement de silicone externe (1) étant la seule enveloppe recouvrant la bande de DEL,
dans lequel lesdites bandes de DEL sont formées par un circuit imprimé flexible qui constitue le conducteur sur lequel une ou plusieurs sources de DEL sont montées et reliées électriquement à ce circuit imprimé,
lesdites bandes étant sous la forme d'une bande mince comprenant à l'intérieur de celle-ci tous les éléments électriques constituant les conducteurs nécessaires au fonctionnement des lumières DEL.

2. Elément d'éclairage (10) selon la revendication 1, dans lequel, sur son côté arrière (3), il y a un ou plusieurs pieds d'attachement (4) qui font partie intégrante dudit revêtement (1).

3. Elément d'éclairage selon la revendication 2, dans lequel lesdits pieds (4) sont en forme de T ou de flèche.

4. Elément d'éclairage selon l'une quelconque des revendications précédentes, dans lequel ledit revêtement externe (1) a un profil en dôme.

5. Elément d'éclairage selon l'une quelconque des revendications précédentes, dans lequel ledit revêtement externe (1) a, dans son intérieur, une cavité (5) de manière à former un élément de butée (8).

6. Elément d'éclairage (10) selon l'une quelconque des revendications précédentes, dans lequel ledit revêtement externe (1) a une ou plusieurs ailettes faisant saillie (7) qui font partie intégrante de celui-ci, lesdites ailettes étant des éléments de butée ou d'étanchéité.

7. Elément d'éclairage (10) selon l'une quelconque des revendications précédentes, dans lequel le matériau élastomère de silicone comprend un ou plusieurs additifs adaptés pour appliquer une résistance à des rayons UV et/ou à de la chaleur et/ou à une flamme, à des bactéries, des moisissures, et/ou un ou plusieurs pigments pour obtenir des effets de couleur.

8. Elément d'éclairage (10) selon l'une quelconque des revendications précédentes, comprenant en outre, encastré dans le revêtement externe unique (1), un élément semi-rigide (11) qui permet l'application d'une rigidité ou, si déformable, d'une configuration finale requise.

9. Procédé de fabrication de l'élément d'éclairage selon les revendications précédentes, comprenant les étapes de :
- la coextrusion continue d'un élastomère de silicone, pouvant être réticulé sans chaleur, autour d'une bande de diodes électroluminescentes, DEL ;
- la réticulation du matériau élastomère de silicone préalablement coextrudé par une exposition à un rayonnement ultraviolet, UV.

10. Procédé selon la revendication 8, dans lequel, avant l'étape de la coextrusion, il est prévu une étape d'ajout, à l'élastomère de silicone, d'additifs selon la revendication 7.

11. Usage de l'élément d'éclairage (10) selon les revendications 1 à 8 en tant que joint.
